# EUROPEAN PATENT SPECIFICATION

(11) **EP 0 389 291 B1**
(45) Date of publication and mention of the grant of the patent: **17.05.1995**
(21) Application number: 90303115.1
(22) Date of filing: 22.03.1990
(51) Int. Cl.: B32B 17/06, B32B 17/10, C03C 27/12, C03C 17/23, E06B 5/16

(54) **Glass laminates**
Glaslaminate
Verres stratifiés

(30) Priority: 23.03.1989 GB 8906731
(43) Date of publication of application: 26.09.1990
(73) Proprietor: PILKINGTON PLC, St. Helens, Merseyside WA10 3TT (GB)
(72) Inventor: Cross, Raymond Peter, Preston, Lancashire PR5 5JR (GB); Evason, John, Southport, Merseyside PR9 8TS (GB)
(74) Representative: Pendlebury, Anthony

(56) References cited:
- EP-A- 0 207 181
- EP-A- 0 215 976
- AT-B- 371 217
- GB-A- 1 451 933
- GB-A- 1 518 958

## Description

The invention relates to glass laminates and their use as barriers to fire.

Glass laminates incorporating an intumescent inorganic interlayer sandwiched between opposed glass panes are known, for example PYROSTOP glass (PYROSTOP is a trade mark of Flachglas AG) available from Pilkington Glass Limited in UK and from Flachglas AG in the Federal Republic of Germany. On exposing such glass to fire, the interlayer intumesces providing a thermally insulating layer which protects the pane of glass remote from the fire so that the structural integrity of the unit is maintained sufficiently to prevent the spread of flame. The thermally insulating layer also reduces the transmission of thermal radiation through the laminate reducing the risk of combustion caused by overheating of materials, especially textile materials, on the side of the laminate remote from the fire. It has been proposed in UK patent 1 518 958 to employ, in such a laminate, at least one ply which bears at least one infra-red reflecting coating isolated from the intumescent interlayer. The coating may be a thin metal coating (for example of aluminium, silver, copper or gold) or a metal oxide coating, for example, a tin oxide coating doped with chlorine, fluorine, arsenic or antimony. The coating is used primarily to screen the intumescent material from solar infra-red radiation which is believed to cause degradation of the intumescent interlayer. However, it is said that, if the coating is between the intumescent interlayer and the fire, then the intumescent material will take longer to heat to a given temperature and will thus provide a more effective thermal barrier. Unfortunately, while glass laminates of this type have a high fire resistance, they are very expensive to produce.

It has also been proposed, in European patent specification EP 0 279 634A1, to improve the fire resistance of safety glass laminated incorporating a polymeric organic interlayer between two panes of glass by incorporating a reinforcing wire mesh in the interlayer. However, any improvement resulting from incorporation of the wire mesh is limited, and there remains a need to improve the fire resistance of laminated safety glass incorporating polymeric organic interlayers.

It has now been found that the fire resistance of laminated glass panels comprising an organic polymeric interlayer sandwiched without any inorganic intumescent interlayers between opposed panes of glass may be substantially improved by providing an infra-red reflecting doped tin oxide coating on each of the exposed faces of the laminate.

According to the present invention, there is provided a fire-resistant glass laminate comprising an organic polymeric interlayer sandwiched without any inorganic intumescent interlayers between opposed panes of glass characterised in that the exposed glass faces of the laminate each bear an infra-red reflecting doped tin oxide coating.

Laminates in accordance with the invention are particularly suitable for use as a fire-resistant safety glazing in an internal door or partition.

It might have been expected that the use of the infra-red reflecting coating on the face of the laminate remote from the fire would lead to more rapid heating of the interlayer, and therefore be avoided, especially when using an organic interlayer liable to burn. However, we have found that this effect is usually small and less important than the advantage gained from reduced transmission of heat, with consequent risk of combustion, to the space on the side of the laminate remote from the fire.

The coating used in the laminates of the invention, being a tin oxide coating, has a high level of durability which makes it suitable for use on exposed surfaces. It preferably has a thickness in the range 100 nm to 1200 nm and, if thinner than 800 nm, is preferably used in conjunction with a colour-suppressing underlayer, for example, as described in UK patent specification GB 2 031 756B.

The fire-resistant glass laminate may be a laminated safety glass. The organic polymeric interlayer will usually be an elastomeric interlayer. An organic polymeric interlayer may be, for example, silicone, polyvinylbutyral or an interlayer, such as a polymethacrylate or other polyacrylate, produced by polymerisation of a liquid resin in situ between two panes of glass (a "cast-in-place interlayer). If desired, the interlayer may incorporate fire retardant additives, and/or a reinforcing wire mesh as described in European patent specification EP 0 279 634A1.

Although the exposed glass face or faces of the laminate may be coated after production of the laminate, it is generally most convenient to produce the laminate (in known manner) using coated glass.

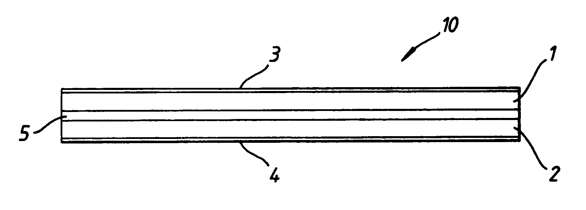

The invention is illustrated but not limited by the following description with reference to the drawing which shows a side elevation of a laminated safety glass (10) in accordance with the invention. In the laminate (10) shown in the drawings, the outer panes (1 and 2) are panes of flat glass, for example float glass, each with a fluorine-doped tin oxide coating (3, 4) on its exposed surface. The panes are united by an interlayer (5) between them.

A laminate (10), as shown in the drawings, was constructed with the panes (1, 2) of 4 mm clear float glass, each 858 mm x 858 mm and bearing a coating (3, 4) comprising a fluorine doped tin oxide layer about 300 nm thick over a colour suppressing underlayer as described in UK patent 2 031 756B. The panes were laminated together with a cast-in-place interlayer (5) of polymethyl methacrylate 1.8 mm thick, polymerised from a methyl methacrylate resin commercially available as Naftolan 5696 ("Naftolan" is a trade mark) from Chemetall of Frankfurt, West Germany. The glass was not edgeworked.

The laminate was glazed into a timber frame which was fixed into a steel frame, and the steel frame placed in an indicative fire test rig in accordance with the testing procedures described in British Standard BS476: Part 22 entitled "Method for determination of the fire resistance of non-loadbearing elements of construction", and exposed to the heating cycle set out in said Part of the Standard.

The laminate withstood the test for 11½ minutes, after which flaming occurred along one vertical edge of the outer (remote from the fire) pane. This time of 11½ minutes is the integrity failure time according to the above BS 476 Part 22. After 15 minutes the inner pane fell inwards and, after 15½ minutes, the outer pane collapsed.

Tests on two substantially identical constructions resulted in integrity failures (according to BS 476 Part 22) after 22 and 12 minutes respectively. In a comparative test on a similar laminate, without the coatings, the laminate had collapsed completely after 8 minutes.

The tests show that use of the doped infra-red tin oxide coating result in a significant extension in the period for which the laminate resists the fire, as well as reducing the transmission of heat to the space on the side of the laminate remote from the fire.

Further tests on a substantially identical construction, using equivalent glass panes 450 mm x 860 mm with a silicone interlayer, resulted in integrity failures at 26 minutes without the coatings and 32 minutes with the coatings according to the present invention. Thus the use of doped tin oxide coatings on the exposed faces of a fire-resistant laminate enables the important commercial advance of a fire-resistant glass laminate passing the 30 minute fire test.

## Claims

1. A fire resistant glass laminate (10) comprising an organic polymeric interlayer (5) sandwiched without any inorganic intumescent interlayers between opposed panes of glass (1,2) characterised in that the exposed glass faces of the laminate (10) each bear an infra-red reflecting doped tin oxide coating (3, 4).

2. A fire-resistant glass laminate (10) according to Claim 1 characterised in that the or each infra-red reflecting doped tin oxide coating (3, 4) is a fluorine doped tin oxide coating.

3. A fire-resistant glass laminate (10) according to either of the preceding claims characterised in that each infra-red reflecting doped tin oxide coating (3, 4) has a thickness in the range 100 nm to 1200 nm.

4. A fire-resistant glass laminate (10) according to any one of the preceding claims characterised in that the glass laminate is a laminated safety glass.

5. A fire-resistant glass laminate (10) according to any one of the preceding claims characterised in that the organic polymeric interlayer (5) is a polyvinylbutyral interlayer.

6. A fire-resistant glass laminate (10) according to any one of Claims 1 to 4 characterised in that the organic polymeric interlayer (5) is a polyacrylate interlayer.

7. A fire-resistant glass laminate (10) according to any one of Claims 1 to 4 characterised in that the organic polymeric interlayer (5) is a silicone interlayer.

8. A fire-resistant glass laminate (10) according to any one of Claims 1 to 4 characterised in that the organic polymeric interlayer (5) is produced by polymerisation of a liquid in situ between the two panes of glass (1, 2).

9. A fire-resistant glass laminate (10) according to any of the preceding claims characterised in that the organic polymeric interlayer (5) contains a fire-resistant additive.

10. Use of a laminate (10) according to any of the preceding claims as a fire-resistant safety glazing in an internal door or partition.

## Patentansprüche

1. Feuerbeständiges Glaslaminat (10), umfassend eine organische polymere Zwischenschicht (5), welche ohne jegliche anorganische, anschwellende Zwischenschicht zwischen gegenüberliegenden Glasplatten (1, 2) sandwichartig vorgesehen ist, dadurch gekennzeichnet, daß die exponierten Glasflächen des Laminates (10) jeweils eine Infrarot-reflektierende, dotierte Zinnoxidschicht (3, 4) tragen.

2. Feuerbeständiges Glaslaminat (10) gemäß Anspruch 1, dadurch gekennzeichnet, daß die oder jede Infrarot-reflektierende, dotierte Zinnoxidschicht (3, 4) eine mit Fluor dotierte Zinnoxidschicht ist.

3. Feuerbeständiges Glaslaminat (10) gemäß jedem der vorhergehenden Ansprüche, dadurch gekennzeichnet, daß jede Infrarot-reflektierende, dotierte Zinnoxidschicht (3, 4) eine Dicke im Bereich von 100 nm bis 1200 nm besitzt.

4. Feuerbeständiges Glaslaminat (10) gemäß einem der vorhergehenden Ansprüche, dadurch gekennzeichnet, daß das Glaslaminat ein laminiertes Sicherheitsglas ist.

5. Feuerbeständiges Glaslaminat (10) gemäß einem der vorhergehenden Ansprüche, dadurch gekennzeichnet, daß die organische, polymere Zwischenschicht (5) eine Polyvinylbutyral-Zwischenschicht ist.

6. Feuerbeständiges Glaslaminat (10) gemäß einem der Ansprüche 1 bis 4, dadurch gekennzeichnet, daß die organische, polymere Zwischenschicht (5) eine Polyacrylat-Zwischenschicht ist.

7. Feuerbeständiges Glaslaminat (10) gemäß einem der Ansprüche 1 bis 4, dadurch gekennzeichnet, daß die organische, polymere Zwischenschicht (5) eine Silikon-Zwischenschicht ist.

8. Feuerbeständiges Glaslaminat (10) gemäß einem der Ansprüche 1 bis 4, dadurch gekennzeichnet, daß die organische, polymere Zwischenschicht (5) durch Polymerisation einer Flüssigkeit in situ zwischen den zwei Glasplatten (1, 2) hergestellt wird.

9. Feuerbeständiges Glaslaminat (10) gemäß einem der vorhergehenden Ansprüche, dadurch gekennzeichnet, daß die organische, polymere Zwischenschicht (5) ein feuerbeständiges Additiv enthält.

10. Verwendung eines Laminates (10) gemäß einem der vorgehenden Ansprüche als eine feuerbeständige Sicherheitsverglasung in einer Innentür oder einer Trennwand.

## Revendications

1. Verre stratifié résistant au feu (10) comprenant une couche intermédiaire polymère organique (5) prise en sandwich sans aucune couche intermédiaire intumescente inorganique entre des vitres opposées de verre (1, 2), caractérisé en ce que les faces de verre exposées du stratifié (10) portent chacune un revêtement d'oxyde d'étain dopé réfléchissant les infrarouges (3, 4).

2. Verre stratifié résistant au feu (10) selon la revendication 1, caractérisé en ce que chaque revêtement d'oxyde d'étain dopé réfléchissant les infrarouges (3, 4) est un revêtement d'oxyde d'étain dopé au fluor.

3. Verre stratifié résistant au feu (10) selon l'une quelconque des revendications précédentes, caractérisé en ce que chaque revêtement d'oxyde d'étain dopé réfléchissant les infrarouges (3, 4) a une épaisseur comprise entre 100 nm et 1200 nm.

4. Verre stratifié résistant au feu (10) selon l'une quelconque des revendications précédentes, caractérisé en ce que le verre stratifié est un verre de sécurité stratifié.

5. Verre stratifié résistant au feu (10) selon l'une quelconque des revendications précédentes, caractérisé en ce que la couche intermédiaire polymère organique (5) est une couche intermédiaire de polybutyral de vinyle.

6. Verre stratifié résistant au feu (10) selon l'une quelconque des revendications 1 à 4, caractérisé en ce que la couche intermédiaire polymère organique (5) est une couche intermédiaire de polyacrylate.

7. Verre stratifié résistant au feu (10) selon l'une quelconque des revendications 1 à 4, caractérisé en ce que la couche intermédiaire polymère organique (5) est une couche intermédiaire de silicone.

8. Verre stratifié résistant au feu (10) selon l'une quelconque des revendications 1 à 4, caractérisé en ce que la couche intermédiaire polymère organique (5) est produite par polymérisation d'un liquide in situ entre les deux vitres de verre (1, 2).

9. Verre stratifié résistant au feu (10) selon l'une quelconque des revendications précédentes, caractérisé en ce que la couche intermédiaire polymère organique (5) renferme un additif résistant au feu.

10. Utilisation d'un stratifié (10) selon l'une quelconque des revendications précédentes en tant que vitrage de sécurité résistant au feu dans une porte ou une cloison interne.
